# EUROPÄISCHE PATENTSCHRIFT

(11) **EP 1 815 602 B1**
(45) Veröffentlichungstag und Bekanntmachung des Hinweises auf die Patenterteilung: **07.05.2008**
(21) Anmeldenummer: 05801336.8
(22) Anmeldetag: 13.10.2005
(51) Int. Cl.: H04B 1/04, H04Q 7/30

(54) **ANORDUNG ZUM ANSCHALTEN VON ZUMINDEST EINER SENDEEINHEIT AN EINE SENDE-EMPFANGSANTENNE**
ARRANGEMENT FOR CONNECTING AT LEAST ONE TRANSMITTER UNIT TO A TRANSCEIVER ANTENNA
DISPOSITIF POUR CONNECTER AU MOINS UNE UNITE EMETTRICE A UNE ANTENNE EMETTRICE-RECEPTRICE

(30) Priorität: 10.11.2004 DE 102004054370
(43) Veröffentlichungstag der Anmeldung: 08.08.2007
(73) Patentinhaber: Nokia Siemens Networks GmbH & Co. KG, 81541 München (DE)
(72) Erfinder: FELGENTREFF, Tilman, 83607 Holzkirchen (DE)
(86) Internationale Anmeldenummer: PCT/EP2005/055213
(87) Internationale Veröffentlichungsnummer: WO 2006/051030

(56) Entgegenhaltungen:
- EP-A- 1 182 786
- US-A1- 2004 137 947

## Beschreibung

Die Erfindung betrifft eine Anordnung zum Anschalten von zumindest einer Sendeeinheit an eine Sende-Empfangsantenne gemäß dem Oberbegriff des Patentanspruchs 1.

Bei Basisstationen werden zur Empfangsverbesserung so genannte "Antenna-Combinig-Empfangsverfahren" verwendet. Dabei wird ein von einem Teilnehmer gesendetes Teilnehmersignal im allgemeinen über zwei Antennensysteme als zwei Empfangssignale an der Basisstation empfangen. Jedes einzelne Empfangssignal wird beispielsweise unter Berücksichtigung einer Signalqualität bzw. eines Signalspegels bewertet. Nachfolgend wird beispielsweise eines der beiden Empfangssignale ausgewählt und weiterverarbeitet.

Sendeseitig werden die beiden Antennensysteme als Sendeantennen für Sendesignale verwendet. Dabei werden beispielsweise bei einem TDMA-Funkkommunikationssystem im allgemeinen zwei, vier oder acht als "Carrier-Units" bezeichnete Sendeeinheiten an die beiden Sendeantennen angeschaltet, wobei jeweils eine, zwei oder vier Sendeeinheiten für jeweils eine Sendeantenne vorgesehen sind. Jede Sendeeinheit bildet dabei eine für eine Teilnehmersignalübertragung verwendete Trägerfrequenz. Zur Anschaltung der Trägerfrequenzen werden so genannte "Duplexer Amplifier Multicoupler, DUAMCO" verwendet, die im allgemeinen für jede Sendeantenne jeweils ein Modul aufweisen.

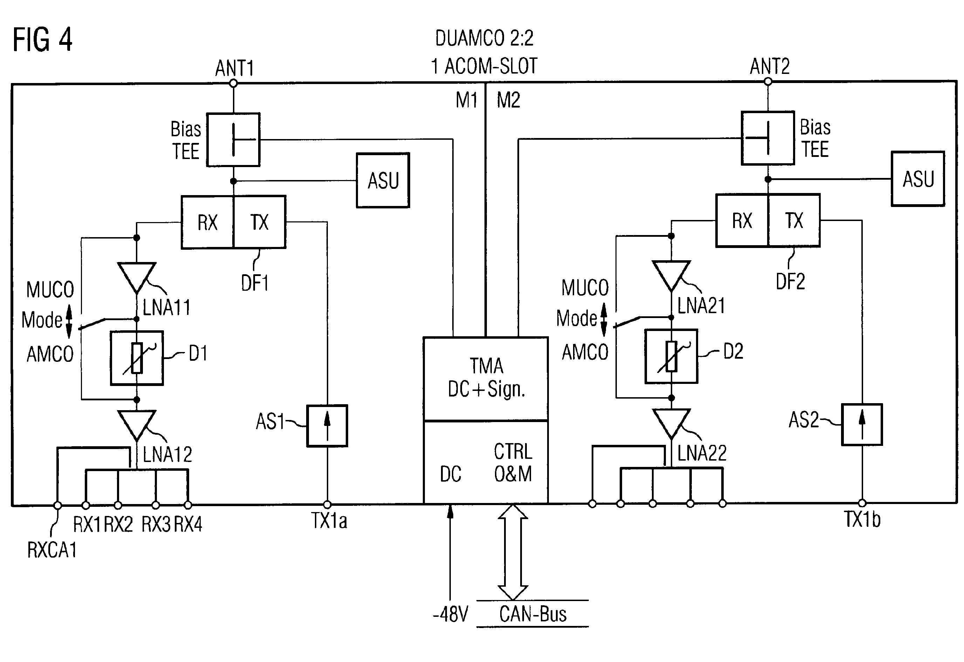

FIG 4 zeigt eine erste Anordnung zum Anschalten von Sendesignalen TX1a und TX1b von zugeordneten Sendeeinheiten an Sende-Empfangsantennen ANT1 und ANT2, gemäß dem Stand der Technik.

Die hier dargestellte Anordnung wird als "DUAMCO 2:2" bezeichnet, d.h. es werden zwei Sendesignale zweier Sendeeinheiten an zwei Sende-Empfangsantennen angeschaltet.

Ein erstes Modul M1 beinhaltet eine Einwegleitung AS1, an der eingangsseitig ein erstes Sendesignal TX1a einer hier nicht dargestellten Sendeeinheit angeschaltet ist. Die Einwegleitung ist auch als Isolator oder als Zirkulator oder einer funktionsähnlichen Baugruppe realisierbar. Die Einwegleitung AS1 ist ausgangsseitig mit einem Sendefilter TX eines Sende-Empfangsduplexfilters DF1 verbunden.

Das Sendesignal TX1a gelangt über die Einwegleitung AS1, das Sendefilter TX und über eine Baugruppe BiasTEE an die Sende-Empfangsantenne ANT1 zur Abstrahlung.

Die Baugruppe BiasTEE dient zur Einspeisung einer Spannungsversorgung und zur Einspeisung einer Signalisierung für einen optionalen "Tower Mounted Amplifier, TMA", der antennennah angeordnet ist. Zu diesem Zweck ist die Baugruppe BiasTEE mit jeweiligen Baugruppen CTRL und TMA verbunden. Mit Hilfe einer Baugruppe ASU wird eine Antennenüberwachung realisiert.

Das erste Modul M1 beinhaltet außerdem zwei wahlweise zuschaltbare Verstärker LNA11 und LNA12, die als "Low Noise Amplifier, LNA" ausgebildet sind. Ein von der Sende-Empfangsantennne ANT1 empfangenes Teilnehmersignal gelangt über die Baugruppe BiasTEE und über einen Empfangsfilter RX des Sende-Empfangsduplexfilters DF1 an die wahlweise zuschaltbaren Verstärker LNA11 und LNA12. Zur Empfangssignalbeeinflussung ist zusätzlich eine Dämpfungseinrichtung D1 vorgesehen, die zwischen den beiden zuschaltbaren Verstärkern LNA11 und LNA12 angeordnet ist.

Der Verstärker LNA12 ist ausgangsseitig über vier Ausgänge RX1, RX2, RX3 und RX4 mit vier zugeordneten, hier nicht dargestellten Empfangseinheiten bzw. Carrier-Units verbunden.

Weiterhin ist ein Ausgang RXCA1 an den Ausgang des Verstärkers LNA12 angekoppelt.

Das erste Modul M1 ist baugleich zu einem zweiten Modul M2, das zur Anschaltung der zweiten Trägerfrequenz TX1b einer hier nicht dargestellten Sendeeinheit an die zweite Sende-Empfangsantenne ANT2 verwendet wird. Entsprechend enthält das zweite Modul M2 einen Sende-Empfangsduplexfilter DF2, eine Baugruppe BiasTEE, eine Einwegleitung AS2 sowie wahlweise schaltbare Verstärker LNA21, LNA22 und eine Dämpfungseinrichtung D2.

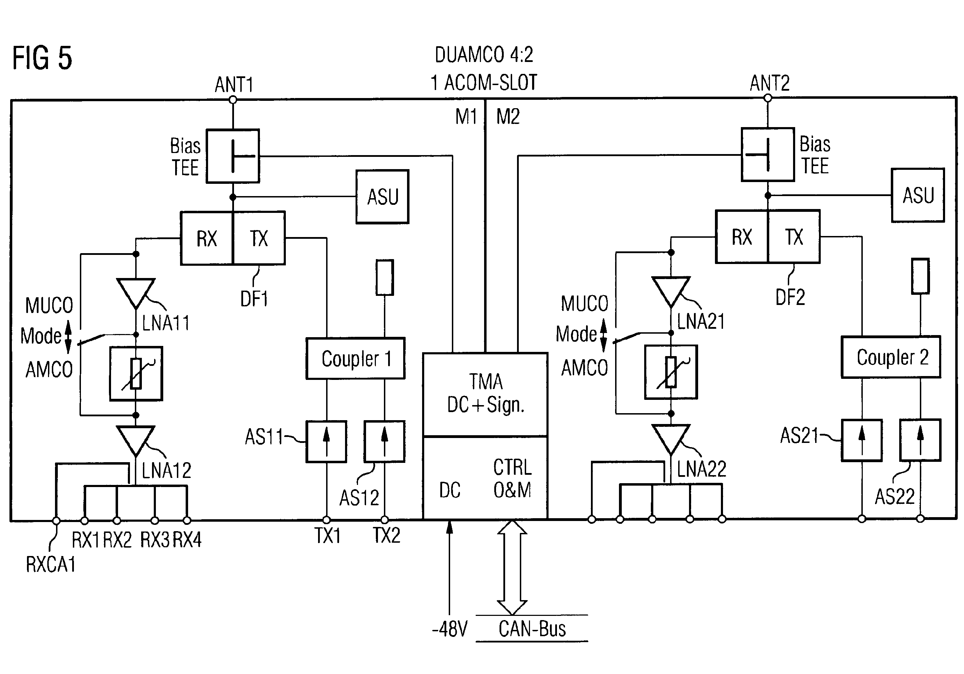

FIG 5 zeigt eine zweite Anordnung zum Anschalten von vier Sendeeinheiten an zwei Sende-Empfangsantennen gemäß dem Stand der Technik.

Die hier dargestellte Anordnung wird als "DUAMCO 4:2" bezeichnet, weil vier Sendesignale von vier Sendeeinheiten an zwei Sende-Empfangsantennen angeschaltet werden.

Ein erstes Modul M1 dient zum Anschalten von zwei Sendesignalen TX1 und TX2 von zwei hier nicht dargestellten Sendeeinheiten an eine Sende-Empfangsantenne ANT1.

Vergleichend zu FIG 4 beinhaltet das erste Modul M1 zwei Einwegleitungen AS11 und AS12, die ausgangsseitig mit jeweiligen Eingängen einer Koppeleinrichtung Coupler1 verbunden sind. An die beiden Einwegleitungen AS11 und AS12 sind eingangsseitig die beiden Sendesignale TX1 und TX2 anschaltbar. Die Einwegleitungen sind jeweils auch als Isolator oder als Zirkulator oder einer funktionsähnlichen Baugruppe realisierbar.

Mit Hilfe der Koppeleinrichtung Coupler1 werden die beiden Sendesignale TX1 und TX2 zusammengefasst und über einen Sendefilter TX eines Sende-Empfangsduplexfilters DF1 der Sende-Empfangsantenne ANT1 zur Abstrahlung zugeführt.

Hinsichtlich der Empfangsbaugruppen und der Steuerungen wird auf die baugleiche Ausführung der FIG 4 verwiesen.

Das in FIG 5 dargestellte erste Modul M1 ist baugleich zum zweiten Modul M2, das zur Anschaltung von zwei weiteren Trägerfrequenzen von hier nicht dargestellten Sendeeinheiten an die zweite Sende-Empfangsantenne ANT2 verwendbar ist. Entsprechend enthält das zweite Modul M2 neben dem Sende-Empfangsduplexfilter DF2 zwei Einwegleitungen AS21 und AS22 sowie eine Koppeleinrichtung Coupler2.

Unbenutzte Ports der hier als 3dB-Koppler ausgebildeten Koppeleinrichtungen Coupler 1 und Coupler2 werden jeweils mit einem Lastwiderstand abgeschlossen.

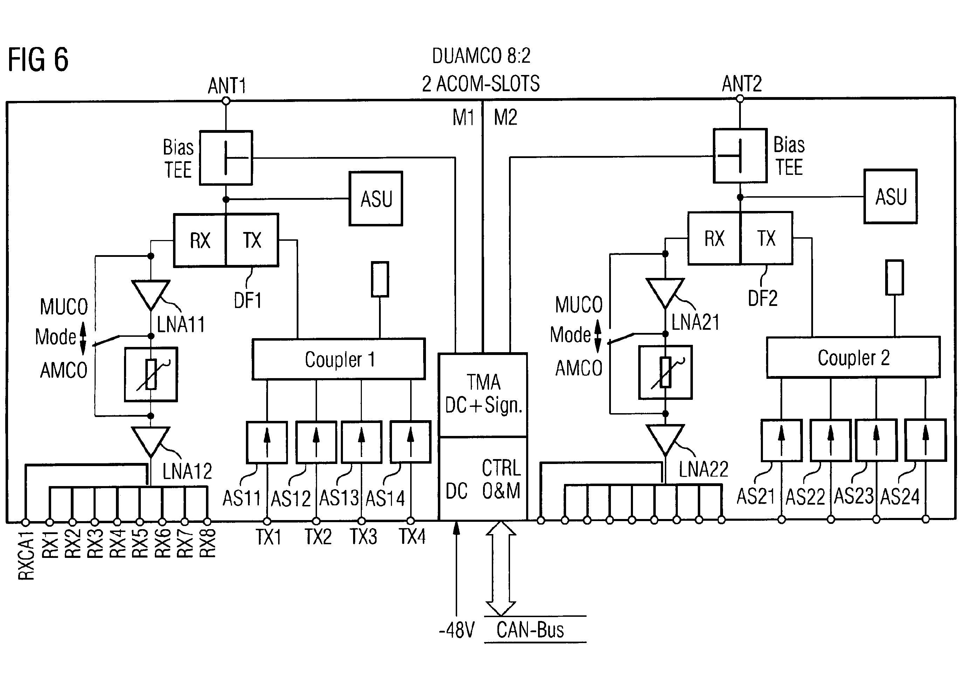

FIG 6 zeigt eine dritte Anordnung zum Anschalten von acht Sendeeinheiten an zwei Sende-Empfangsantennen gemäß dem Stand der Technik.

Die hier dargestellte Anordnung wird als "DUAMCO 8:2" bezeichnet, weil acht Sendesignale von acht Sendeeinheiten an zwei Sende-Empfangsantennen angeschaltet werden.

Ein erstes Modul M1 dient zum Anschalten von vier Sendesignalen TX1, TX2, TX3 und TX4 von vier hier nicht dargestellten Sendeeinheiten an eine Sende-Empfangsantenne ANT1.

Vergleichend zu FIG 5 beinhaltet das erste Modul M1 vier Einwegleitungen AS11, AS12, AS13 und AS14, die ausgangsseitig mit jeweiligen Eingängen einer Koppeleinrichtung Coupler1 verbunden sind. An die vier Einwegleitungen AS11, AS12, AS13 und AS14 sind eingangsseitig die vier Sendesignale TX1 bis TX4 jeweils einzeln anschaltbar.

Die Einwegleitungen sind jeweils auch als Isolator oder als Zirkulator oder einer funktionsähnlichen Baugruppe realisierbar.

Mit Hilfe der Koppeleinrichtung Coupler1 werden die vier Sendesignale TX1 bis TX4 zusammengefasst und über einen Sendefilter TX eines Sende-Empfangsduplexfilters DF1 der Sende-Empfangsantenne ANT1 zur Abstrahlung zugeführt.

Hinsichtlich der Empfangsbaugruppen und der Steuerungen wird auf die baugleiche Ausführung der FIG 5 verwiesen, wobei lediglich der Verstärker LNA12 an insgesamt acht Ausgänge des ersten Moduls M1 angeschaltet ist.

Das in FIG 6 dargestellte erste Modul M1 ist baugleich zum zweiten Modul M2, das zur Anschaltung von vier weiteren Trägerfrequenzen von hier nicht dargestellten Sendeeinheiten an die zweite Sende-Empfangsantenne ANT2 verwendbar ist. Entsprechend enthält das zweite Modul M2 neben dem Sende-Empfangsduplexfilter DF2 insgesamt vier Einwegleitungen AS21, AS22, AS23 und AS24 sowie eine Koppeleinrichtung Coupler2.

Unbenutzte Ports der Koppeleinrichtungen Coupler 1 und Coupler2 werden mit jeweils einem Lastwiderstand abgeschlossen.

Die in den Figuren FIG 4 bis FIG 6 dargestellten Anordnungen sind jeweilige feste Bestandteile einer Basisstation. Die Basisstation wäre somit nur durch einen mit großem Aufwand durchzuführenden Komponentenaustausch beispielsweise von vier auf acht Trägerfrequenzen bzw. von vier auf acht Sendeeinheiten erweiterbar.

Es ist daher Aufgabe der vorliegenden Erfindung, eine Anordnung zum Anschalten von einer oder mehreren Sendeeinheiten an eine Sendeempfangsantenne anzugeben, die mit geringem Aufwand erweiterbar ist.

Diese Aufgabe wird durch die Merkmale des Patentanspruchs 1 gelöst. Vorteilhafte Weiterbildungen sind in den Unteransprüchen angegeben.

Mit Hilfe der erfindungsgemäßen Anordnung ist es möglich, durch Verwendung von festen aber lösbaren Verbindungen und durch eine bedarfsweise erfolgende Zuschaltung einer Erweiterungseinheit beginnend bei einem Sendesignal bzw. Sendeeinheit bis zu vier Sendeeinheiten bzw. Sendesignale mit geringem zusätzlichen Aufwand an jeweils eine Sende-Empfangsantenne anzuschalten.

Wird die erfindungsgemäße Anordnung modular aufgebaut, so ist unter Verwendung von zwei Modulen mit geringem Aufwand eine "DUCOM 2:2" oder eine "DUCOM 4:2" oder eine "DUCOM 8:2" realisierbar.

Eine nachträgliche Basisstationserweiterung auf weitere Sendeeinheiten ist mit geringem Zusatzaufwand durchführbar.

Nachfolgend wird die Erfindung anhand einer Zeichnung näher erläutert. Dabei zeigt:
- FIG 1: eine erfindungsgemäße Anordnung zum Anschalten von zumindest einer Sendeeinheit an eine Sende-Empfangs-Antenne,
- FIG 2: eine an die erfindungsgemäße Anordnung gemäß FIG 1 anschaltbare Erweiterungseinheit für eine Anschaltung von zumindest drei Sendeeinheiten an die Sende-Empfangs-Antenne,
- FIG 3: mit Bezug auf FIG 1 und FIG 2 die erfindungsgemäße Anordnung mit angeschalteter Erweiterungseinheit,
- FIG 4: die in der Beschreibungseinleitung erläuterte erste Anordnung zum Anschalten zweier Sendeeinheiten an zwei Sende-Empfangsantennen gemäß dem Stand der Technik,
- FIG 5: die in der Beschreibungseinleitung erläuterte zweite Anordnung zum Anschalten von vier Sendeeinheiten an zwei Sende-Empfangsantennen gemäß dem Stand der Technik, und
- FIG 6: die in der Beschreibungseinleitung erläuterte dritte Anordnung zum Anschalten von acht Sendeeinheiten an zwei Sende-Empfangsantennen gemäß dem Stand der Technik.

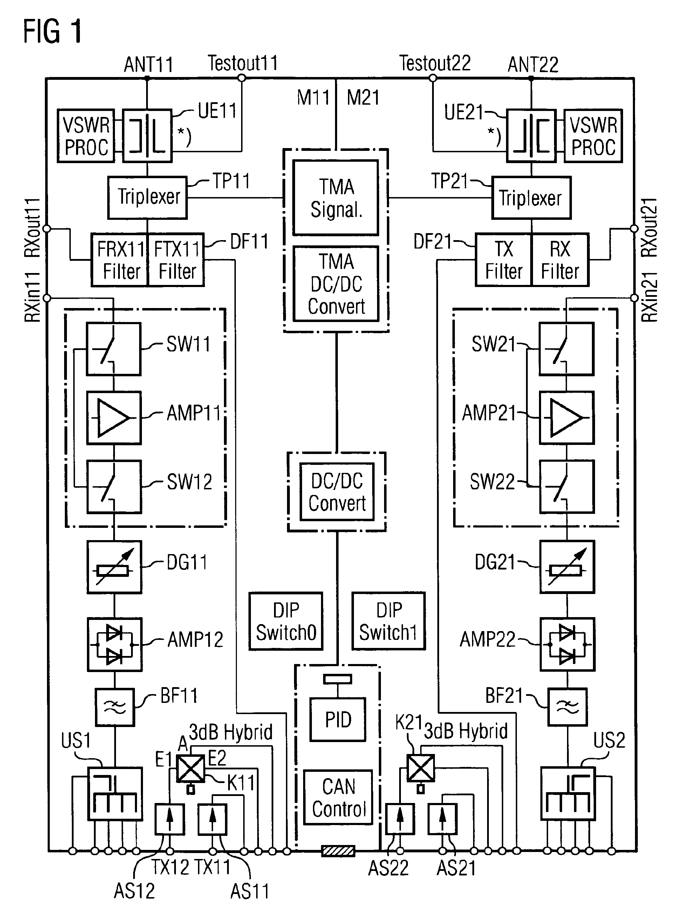

FIG 1 zeigt eine erfindungsgemäße Anordnung zum Anschalten von zumindest einer Sendeeinheit an eine Sende-EmpfangsAntenne.

Die erfindungsgemäße Anordnung ist in Form eines ersten Moduls M11 dargestellt und beinhaltet aus sendeseitiger Sicht eine erste Einwegleitung AS11 und eine zweite Einwegleitung AS12, die jeweils einen Eingang und einen Ausgang aufweisen, eine erste Koppeleinrichtung K11, die einen ersten Eingang E1 und zweiten Eingang E2 sowie einen Ausgang A aufweist. Weiter weist das erste Modul M11 einen Sende-Empfangs-Duplexfilter DF11 auf, über dessen Sendefilter FTX11 ein für eine erste Sende-Empfangsantenne Ant11 bestimmtes Sendesignal zur Abstrahlung gelangt.

Die jeweiligen Einwegleitungen sind auch als Isolatoren oder als Zirkulatoren oder als funktionsähnliche Baugruppen realisierbar.

Die erste Einwegleitung AS11 ist einer hier nicht dargestellten ersten Sendeeinheit zugeordnet, die ein erstes Sendesignal TX11 bereitstellt. Die zweite Einwegleitung AS12 ist einer hier nicht dargestellten zweiten Sendeeinheit zugeordnet, die ein zweites Sendesignal TX12 bereitstellt.

Der erste Eingang E1 der ersten Koppeleinrichtung K11 ist mit dem Ausgang der zweiten Einwegleitung AS12 verbunden.

Der Eingang der ersten Einwegleitung AS11 und der Eingang der zweiten Einwegleitung AS12 sind für eine feste aber lösbare Verbindung mit der jeweils zugeordneten Sendeeinheit ausgebildet, um die zugeordneten Sendesignale TX11 und TX12 aufnehmen zu können.

Der Eingang des Sendefilters FTX11, der zweite Eingang E2 der ersten Koppeleinrichtung K11, der Ausgang A der ersten Koppeleinrichtung K11 und der Ausgang der ersten Einwegleitung AS11 sind ebenfalls für jeweilige feste aber lösbare Verbindungen ausgebildet, so dass unter Verwendung der festen aber lösbaren Verbindungen wahlweise zumindest eines der Sendesignale TX11 bzw. TX12 der jeweiligen zugeordneten Sendeeinheit an den Eingang des Sendefilters FTX11 anschaltbar ist.

Das an den Filter FTX11 angeschaltete Sendesignal gelangt über den Sende-Empfangs-Duplexfilter DF11, einen Triplexer TP11 und einer Überwachungseinrichtung UE11 mit VSWR-Kontrolle "VSWR PROC" an die erste Sende-Empfangsantenne Ant11. Die Überwachungseinrichtung UE11 wird dazu verwendet, ein um ca. 40 dB gedämpftes Signal eines Antennenports der Antenne Ant11 bereitzustellen. Zu diesem Zweck kann an einem Ausgang Testout11 eine Testsignalüberprüfung erfolgen.

Durch die festen aber lösbaren Verbindungen ist wahlweise das erste Sendesignal TX11 und/oder das zweite Sendesignal TX12 an Sende-Empfangsantenne ANT1 anschaltbar.

Für eine Anschaltung von beispielsweise dem ersten Sendesignal TX11 wird die zugeordnete Sendeeinheit mit dem Eingang der ersten Einwegleitung AS11 fest aber lösbar verbunden. Zusätzlich wird der Ausgang der ersten Einwegleitung AS11 mit dem Eingang des Sendefilters FTX11 fest aber lösbar verbunden.

Für eine Anschaltung der beiden Sendesignale TX11 und TX12 wird die dem ersten Sendesignal TX11 zugeordnete erste Sendeeinheit mit dem Eingang der ersten Einwegleitung AS11 fest aber lösbar verbunden. Die dem zweiten Sendesignal TX12 zugeordnete zweite Sendeeinheit wird mit dem Eingang der zweiten Einwegleitung AS12 fest aber lösbar verbunden.
Der Ausgang der ersten Einwegleitung AS11 wird mit dem zweiten Eingang E2 der Koppeleinrichtung K11 und der Ausgang A der Koppeleinrichtung K11 wird mit dem Eingang des Sendefilters FTX11 jeweils fest aber lösbar verbunden.

Aus empfangsseitiger Sicht weist das erste Modul M11 einen Empfangsfilter FRX11 des Sende-Empfangs-Duplexfilters DF11, einen ersten Schalter SW11, einen ersten Verstärker AMP11, einen zweiten Schalter SW12, eine Dämpfungseinrichtung DG11, einen zweiten Verstärker AMP12, einen Filter BF11 sowie mehrere parallele Ausgänge in Form einer Auswahleinrichtung US1 auf, die mit dem Ausgang des zweiten Verstärkers AMP12 verbunden sind.

Ein über die Sende-Empfangsantenne Ant11 empfangenes Signal gelangt über die Überwachungseinrichtung UE11, den Triplexer TP11 und über die oben genannten empfangsseitigen Komponenten an die parallelen Ausgänge, die mit jeweiligen anschaltbaren Empfangseinheiten bzw. Carrier-Units gleichfalls fest aber lösbar zur Signalauswertung anschaltbar sind.

Wird die erfindungsgemäße Anordnung baugleich in einem zweiten Modul M21 realisiert, so bilden das erste Modul M11 und das zweite Modul M21 je nach Wahl einen "DUAMCO 2:2" oder einen "DUAMCO 4:2" zur Anschaltung von zwei bzw. vier Sendesignalen an zwei Sende-Empfangsantennen Ant11 und Ant22.

Entsprechend beinhaltet das zweite Modul M21 eine erste Einwegleitung AS21 und eine zweite Einwegleitung AS22, eine erste Koppeleinrichtung K21, einen Sende-Empfangs-Duplexfilter DF21, einen Triplexer TP21, eine Überwachungseinrichtung UE21, einen ersten Schalter SW21, einen ersten Verstärker AMP21, einen zweiten Schalter SW22, eine Dämpfungseinrichtung DG21, einen zweiten Verstärker AMP22, einen Filter BF21 sowie eine Auswahleinrichtung US2 auf.

Die Koppeleinrichtungen K11 bzw. K21 sind bevorzugt als 3dB-Hybrid-Koppler ausgebildet. In einer vorteilhaften Weiterbildung ist bei jedem der Module M11 und M21 über jeweilige Ports RXout11, RXin11, RXout21 und RXin21 ein zusätzliches empfangsseitiges Filter - hier nicht dargestellt - anschaltbar.

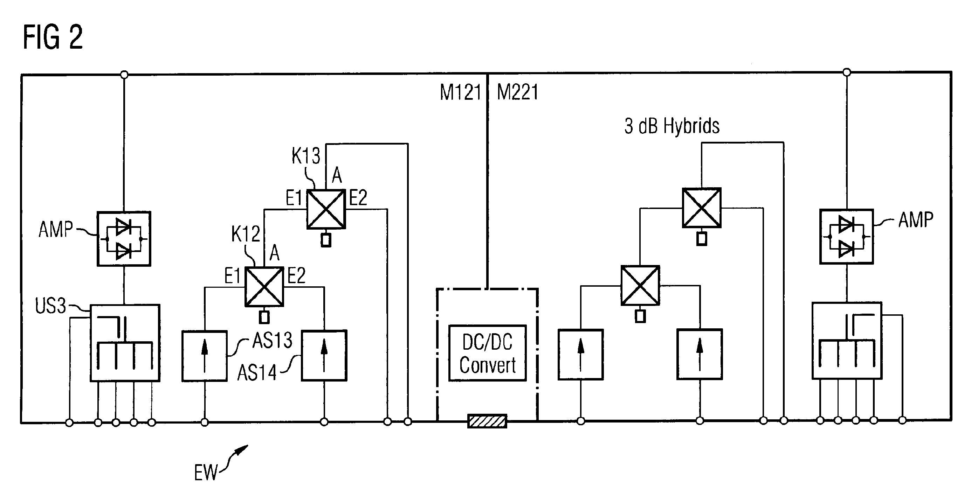

FIG 2 zeigt eine an die erfindungsgemäße Anordnung gemäß FIG 1 anschaltbare Erweiterungseinheit EW für eine Anschaltung von zumindest drei Sendeeinheiten an die Sende-Empfangsantenne Ant11.

Die Erweiterungseinheit EW ist als ein erstes Modul M121 realisiert und beinhaltet aus sendeseitiger Sicht eine dritte Einwegleitung AS13 und eine vierte Einwegleitung AS14, die jeweils einen Eingang und einen Ausgang aufweisen. Weiter beinhaltet das erste Modul M121 eine zweite Koppeleinrichtung K12 und eine dritte Koppeleinrichtung K13, die jeweils zwei Eingänge E1 und E2 sowie einen Ausgang A aufweisen.

Die jeweiligen Eingänge der beiden Einwegleitungen AS13 und AS14 sind für eine feste aber lösbare Verbindung mit jeweils zugeordneten Sendeeinheiten ausgebildet. Der Ausgang der dritten Einwegleitung AS13 ist mit einem ersten Eingang E1 der zweiten Koppeleinrichtung K12 verbunden. Der Ausgang der vierten Einwegleitung AS14 ist mit einem zweiten Eingang E2 der zweiten Koppeleinrichtung K12 verbunden. Der Ausgang A der zweiten Koppeleinrichtung K12 ist mit einem ersten Eingang E1 der dritten Koppeleinrichtung K13 verbunden. Ein zweiter Eingang E2 und der Ausgang A der dritten Koppeleinrichtung K13 sind für eine feste aber lösbare Verbindung ausgebildet.

Aus empfangsseitiger Sicht weist das erste Modul M12 der Erweiterungseinheit EW einen Verstärker AMP sowie eine Auswahleinrichtung US3 auf.

Zur Einspeisung von bis zu acht Sendesignalen an zwei Sende-Empfangsantennen ist neben dem ersten Modul M121 ein baugleiches zweites Modul M221 vorgesehen.

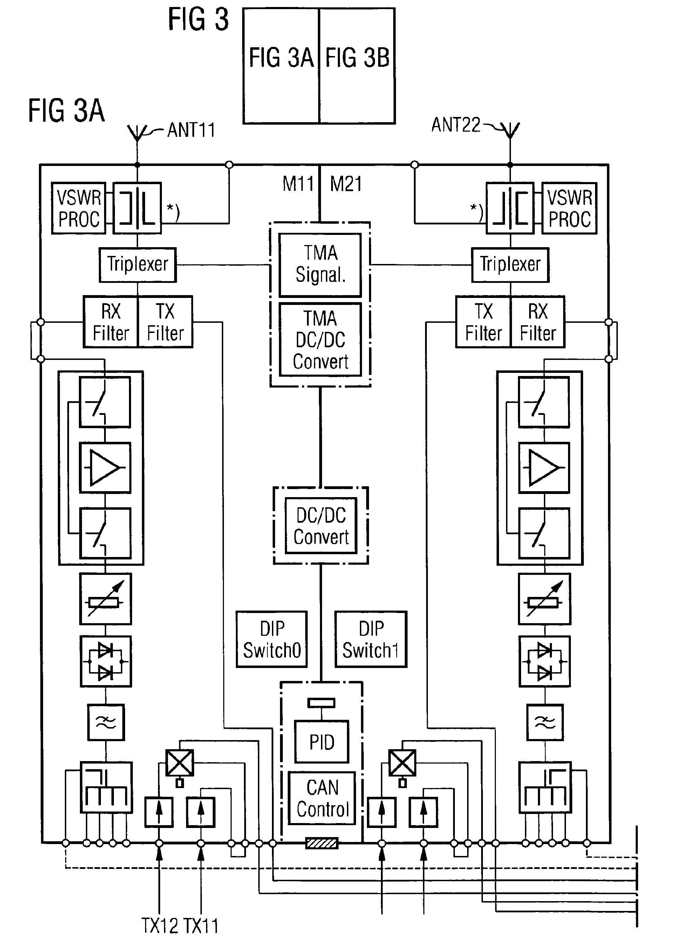

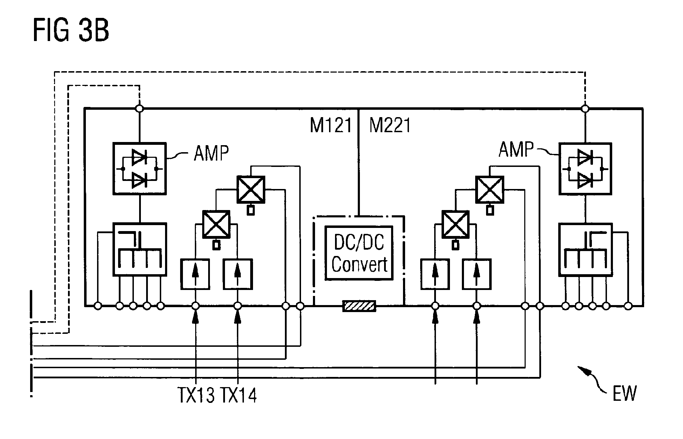

FIG 3 zeigt mit Bezug auf FIG 1 und FIG 2 die erfindungsgemäße Anordnung mit angeschalteter Erweiterungseinheit EW, um insgesamt vier Sendesignale TX11, TX12, TX13 und TX14 in die Sende-Empfangsantenne Ant11 einzuspeisen.

Dabei wird eine dem ersten Sendesignal TX11 zugeordnete (hier nicht dargestellte) erste Sendeeinheit mit dem Eingang der ersten Einwegleitung AS11 fest aber lösbar verbunden. Eine dem zweiten Sendesignal TX12 zugeordnete (hier nicht dargestellte) zweite Sendeeinheit wird mit dem Eingang der zweiten Einwegleitung AS12 fest aber lösbar verbunden. Eine dem dritten Sendesignal TX13 zugeordnete (hier nicht dargestellte) dritte Sendeeinheit wird mit dem Eingang der dritten Einwegleitung AS13 des ersten Moduls M121 aber lösbar verbunden. Eine dem vierten Sendesignal TX14 zugeordnete (hier nicht dargestellte vierte Sendeeinheit) wird mit dem Eingang der vierten Einwegleitung AS14 des ersten Moduls M121 fest aber lösbar verbunden.

Der Ausgang der ersten Einwegleitung AS11 wird mit dem zweiten Eingang E2 der ersten Koppeleinrichtung K11 und der Ausgang A der ersten Koppeleinrichtung K11 wird mit dem zweiten Eingang E2 der dritten Koppeleinrichtung K13 fest aber lösbar verbunden. Abschließend wird der Ausgang A der dritten Koppeleinrichtung K13 mit dem Eingang des Sendefilters FTX11 fest aber lösbar verbunden.

Werden sinngemäß die entsprechenden Verbindungen zwischen dem zweiten Modul M22 der erfindungsgemäßen Anordnung aus FIG 1 und des zweiten Moduls M221 aus FIG 2 angebracht, so wird ein "DUAMCO 8:2" zur Anschaltung von acht Sendesignalen an die beiden Sende-Empfangsantennen Ant11 und Ant22 realisiert.

Bei Figur FIG 3 wurden in den jeweiligen Modulen die in FIG 1 erläuterten Ports RXin11, RXout11, RXin21 und RXout21 kurzgeschlossen.

## Patentansprüche

1. Anordnung zum Anschalten von zumindest einer Sendeeinheit an eine Sende-Empfangsantenne,
- mit einem Sende-Empfangs-Duplexfilter (DF11), über dessen Sendefilter (FTX11) ein von der zumindest einen Sendeeinheit gebildetes Sendesignal (TX11, TX12) an die Sende-Empfangsantenne (Ant11) gelangt,
- mit einer ersten Koppeleinrichtung (K11), die einen ersten und zweiten Eingang (E1, E2) sowie einen Ausgang (A) aufweist,
- mit zwei Einwegleitungen (AS11, AS12), die jeweils einen Eingang und einen Ausgang aufweisen, wobei jede Einwegleitung (AS11, AS12) einer jeweiligen Sendeeinheit (TX11, TX12) zugeordnet ist,
- bei der der erste Eingang (E1) der ersten Koppeleinrichtung (K11) mit dem Ausgang der zweiten Einwegleitung verbunden ist,
**dadurch gekennzeichnet,**
- **dass** der Eingang jeder Einwegleitung (AS11, AS12) für eine feste aber lösbare Verbindung mit der jeweils zugeordneten Sendeeinheit ausgebildet ist,
- **dass** der Eingang des Sendefilters (FTX11), der zweite Eingang (E2) der ersten Koppeleinrichtung (K11), der Ausgang (A) der ersten Koppeleinrichtung (K11) und der Ausgang der ersten Einwegleitung (AS11) für jeweilige feste aber lösbare Verbindungen ausgebildet sind, um wahlweise zumindest ein Sendesignal (TX11, TX12) einer zugeordneten Sendeeinheit an den Eingang des Sendefilters (FTX11) anzuschalten.

2. Anordnung nach Anspruch 1, **dadurch gekennzeichnet, dass** für eine Anschaltung von genau einem Sendesignal (TX11) die zugeordnete Sendeeinheit mit dem Eingang der ersten Einwegleitung (AS11) und der Ausgang der ersten Einwegleitung (AS11) mit dem Eingang des Sendefilters (FTX11) jeweils fest aber lösbar verbunden sind.

3. Anordnung nach Anspruch 1, **dadurch gekennzeichnet, dass** für eine Anschaltung von zwei Sendesignalen (TX11, TX12)
- eine erste Sendeeinheit mit dem Eingang der ersten Einwegleitung (AS11),
- eine zweite Sendeeinheit mit dem Eingang der zweiten Einwegleitung (AS12),
- der Ausgang der ersten Einwegleitung (AS11) mit dem zweiten Eingang (E2) der ersten Koppeleinrichtung (K11), und
- der Ausgang (A) der ersten Koppeleinrichtung (K11) mit dem Eingang des Sendefilters (FTX11)
jeweils fest aber lösbar verbunden sind.

4. Anordnung nach Anspruch 1, **dadurch gekennzeichnet, dass** für eine Anschaltung von vier Sendesignalen (TX13, TX14) eine zusätzliche über feste aber lösbare Verbindungen anschaltbare Erweiterungseinheit (EW) vorgesehen ist.

5. Anordnung nach Anspruch 4, **dadurch gekennzeichnet,**
- **dass** die Erweiterungseinheit (EW) eine dritte und eine vierte Einwegleitung (AS13, AS14) beinhaltet, die jeweils einen Eingang und einen Ausgang aufweisen und die jeweiligen Eingänge für eine feste aber lösbare Verbindung mit jeweils zugeordneten Sendeeinheiten ausgebildet sind,
- **dass** die Erweiterungseinheit (EW) eine zweite und eine dritte Koppeleinrichtung (K12, K13) beinhaltet, die jeweils einen ersten und zweiten Eingang (E1, E2) sowie einen Ausgang (A) aufweisen,
- **dass** der Ausgang der dritten Einwegleitung (AS13) mit einem ersten Eingang (E1) der zweiten Koppeleinrichtung (K12) verbunden ist und dass der Ausgang der vierten Einwegleitung (AS14) mit einem zweiten Eingang (E2) der zweiten Koppeleinrichtung (K12) verbunden ist,
- **dass** der Ausgang (A) der zweiten Koppeleinrichtung (K12) mit einem ersten Eingang (E1) der dritten Koppeleinrichtung (K13) verbunden ist,
- **dass** ein zweiter Eingang (E2) und der Ausgang (A) der dritten Koppeleinrichtung (K13) für eine feste aber lösbare Verbindung ausgebildet sind.

6. Anordnung nach Anspruch 5, **dadurch gekennzeichnet, dass** für eine Anschaltung von vier Sendesignalen (TX11, TX12, TX13, TX14) :
- eine erste Sendeeinheit (TX11) mit dem Eingang der ersten Einwegleitung (AS11),
- eine zweite Sendeeinheit (TX12) mit dem Eingang der zweiten Einwegleitung (AS12),
- eine dritte Sendeeinheit (TX13) mit dem Eingang der dritten Einwegleitung (AS13),
- eine vierte Sendeeinheit (TX14) mit dem Eingang der vierten Einwegleitung (AS14),
- der Ausgang der ersten Einwegleitung (AS11) mit dem zweiten Eingang (E2) der ersten Koppeleinrichtung (K11) und der Ausgang (A) der ersten Koppeleinrichtung (K11) mit dem zweiten Eingang (E2) der dritten Koppeleinrichtung (K13), und
- der Ausgang (A) der dritten Koppeleinrichtung (K13) mit dem Eingang des Sendefilters (TFX11)
jeweils fest aber lösbar verbunden sind.

7. Anordnung nach einem der vorhergehenden Ansprüche,
**dadurch gekennzeichnet,**
**dass** die Koppeleinrichtungen (K11, K12, K13) als 3dB-Hybrid-Koppler ausgebildet sind, deren jeweiliger unbenutzter Port mit einem Lastwiderstand abgeschlossen ist.

8. Anordnung nach einem der vorhergehenden Ansprüche,
**dadurch gekennzeichnet,**
**dass** der Sende-Empfangs-Duplexfilter (DF11) einen Empfangsfilter (FRX11) aufweist, über den ein von der Sende-Empfangsantenne empfangenes Signal über jeweilige dem Empfangsfilter (FRX11) nachgeschaltete Verstärker und Filter an eine Auswahlschaltung (US1, US2, US3) gelangt.

9. Anordnung nach Anspruch 8, **dadurch gekennzeichnet,**
- **dass** die Erweiterungseinheit (EW) gleichfalls eine Auswahlschaltung (US3) beinhaltet, und
- **dass** bei Verwendung der Erweiterungseinheit (EW) deren Auswahlschaltung (US3) mit der dem Empfangsfilter (FRX11) nachgeschalteten Auswahlschaltung (US1) für eine an der Auswahlschaltung (US3) der Erweiterungseinheit (EW) erfolgenden Signalauswertung verbunden ist.

## Claims

1. Arrangement for connecting at least one transmit unit to a transmit/receive antenna,
- comprising a transmit/receive duplex filter (DF11) via the transmit filter (FTX11) of which a transmit signal (TX11, TX12) formed by the at least one transmit unit passes to the transmit/receive antenna (ANT11),
- comprising a first coupling device (K11) which has a first and second input (E1, E2) and an output (A),
- comprising two unidirectional lines (AS11, AS12) which in each case have an input and an output, each unidirectional line (AS11, AS12) being allocated to a respective transmit unit (TX11, TX12),
- in which the first input (E1) of the first coupling device (K11) is connected to the output of the second unidirectional line,
**characterized in that**
- the input of each unidirectional line (AS11, AS12) is arranged for a fixed but detachable connection to the in each case associated transmit unit,
- the input of the transmit filter (FTX11), the second input (E2) of the first coupling device (K11), the output (A) of the first coupling device (K11) and the output of the first unidirectional line (AS11) are arranged for respective fixed but detachable connections for optionally connecting at least one transmit signal (TX11, TX12) of an associated transmit unit to the input of the transmit filter (FTX11) .

2. Arrangement according to Claim 1, **characterized in that**, for connecting exactly one transmit signal (TX11), the associated transmit unit is connected firmly but detachably to the input of the first unidirectional line (AS11) and the output of the first unidirectional line (AS11) is connected firmly but detachably to the input of the transmit filter (FTX11) .

3. Arrangement according to Claim 1, **characterized in that**, for connecting two transmit signals (TX11, TX12),
- a first transmit unit is connected firmly but detachably to the input of the first unidirectional line (AS11),
- a second transmit unit is connected firmly but detachably to the input of the second unidirectional line (AS12),
- the output of the first unidirectional line (AS11) is connected firmly but detachably to the second input (E2) of the first coupling device (K11), and
- the output (A) of the first coupling device (K11) is connected firmly but detachably to the input of the transmit filter (FTX11).

4. Arrangement according to Claim 1, **characterized in that**, for connecting four transmit signals (TX13, TX14), an additional extension unit (EW), which can be connected via fixed but detachable connections, is provided.

5. Arrangement according to Claim 4, **characterized in that**
- the extension unit (EW) contains a third and a fourth unidirectional line (AS13, AS14) which in each case have an input and an output and the respective inputs are arranged for a fixed but detachable connection to in each case associated transmit units.
- the extension (EW) contains a second and a third coupling device (K12, K13) which in each case have a first and second input (E1, E2) and an output (A),
- the output of the third unidirectional line (AS13)is connected to a first input (E1) of the second coupling device (K12) and that the output of the fourth unidirectional line (AS14) is connected to a second input (E2) of the second coupling device (K12),
- the output (A) of the second coupling device (K12) is connected to a first input (E1) of the third coupling device (K13),
- that a second input (E2) and the output (A) of the third coupling device (K13) are arranged for a fixed but detachable connection.

6. Arrangement according to Claim 5, **characterized in that**, for connecting four transmit signals (TX11, TS12, TX13, TX14):
- a first transmit unit (TX11) is connected firmly but detachably to the input of the first unidirectional line (AS11),
- a second transmit unit (TX12) is connected firmly but detachably to the input of the second unidirectional line (AS12),
- a third transmit unit (TX13) is connected firmly but detachably to the input of the third unidirectional line (AS13),
- a fourth transmit unit (TX14) is connected firmly but detachably to the input of the fourth unidirectional line (AS14),
- the output of the first unidirectional line (AS11) is connected firmly but detachably to the second input (E2) of the first coupling device (K11) and the output (A) of the first coupling device (K11) is connected firmly but detachably to the second input (E2) of the third coupling device (K13), and
- the output (A) of the third coupling device (K13) is connected firmly but detachably to the input of the transmit filter (TFX11).

7. Arrangement according to one of the preceding claims, **characterized in that** the coupling devices (K11, K12, K13) are arranged as 3-dB hybrid couplers, the respective unused port of which is terminated with a load impedance.

8. Arrangeent according to one of the preceding claims, **characterized in that**, the transmit/receive duplex filter (DF11) has a receive filter (FRX11) via which a signal received from the transmit/receive antenna arrives at a selection circuit (US1, US2, US3) respectively via amplifiers and filters connected downstream of the receive filter (FRX11) .

9. Arrangement according to Claim 8, **characterized in that**,
- the extension unit (EW) likewise contains a selection (US3), and
- when the extension unit (EW) is used its selection circuit (US3) is connected to the selection circuit (US1) connected downstream of the receive filter (FRX11) for the purpose of a signal evaluation which takes place at the selection circuit (US3) of the extension unit (EW).

## Revendications

1. Dispositif pour connecter au moins une unité émettrice à une antenne émettrice-réceptrice,
- comprenant un filtre duplex émetteur-récepteur (DF11) par le biais du filtre émetteur (FTX11) duquel un signal d'émission (TX11, TX12) formé par la au moins une unité émettrice parvient à l'antenne émettrice-réceptrice (Ant11),
- comprenant un premier dispositif de couplage (K11) pourvu d'une première et d'une seconde entrée (E1, E2) ainsi que d'une sortie (A),
- comprenant deux conducteurs unidirectionnels(AS11, AS12) pourvus à chaque fois d'une entrée et d'une sortie, chaque conducteur unidirectionnel (AS11, AS12) étant associé à une unité émettrice respective (TX11, TX12),
- dans lequel la première entrée (E1) du premier dispositif de couplage (K11) est reliée à la sortie du deuxième conducteur unidirectionnel,
**caractérisé**
- **en ce que** l'entrée de chaque conducteur unidirectionnel (AS11, AS12) est exécutée pour une connexion fixe mais détachable avec l'unité émettrice respectivement associée,
- **en ce que** l'entrée du filtre émetteur (FTX11), la seconde entrée (E2) du premier dispositif de couplage (K11), la sortie (A) du premier dispositif de couplage (K11) et la sortie du premier conducteur unidirectionnel (AS11) sont exécutées pour des liaisons fixes mais détachables respectives pour connecter, facultativement, au moins un signal d'émission (TX11, TX12) d'une unité émettrice associée à l'entrée du filtre émetteur (FTX11).

2. Dispositif selon la revendication 1, **caractérisé en ce que**, pour une connexion d'un signal d'émission précis (TX11), l'unité émettrice associée est reliée à l'entrée du premier conducteur unidirectionnel (AS11) et la sortie du premier conducteur unidirectionnel (AS11) est reliée à l'entrée du filtre émetteur (FTX11) à chaque fois d'une manière fixe mais détachable.

3. Dispositif selon la revendication 1, **caractérisé en ce que**, pour une connexion de deux signaux d'émission (TX11, TX12),
- une première unité émettrice est reliée à l'entrée du premier conducteur unidirectionnel (AS11),
- une deuxième unité émettrice est reliée à l'entrée du deuxième conducteur unidirectionnel (AS12),
- la sortie du premier conducteur unidirectionnel (AS11) est reliée à la seconde entrée (E2) du premier dispositif de couplage (K11) et
- la sortie (A) du premier dispositif de couplage (K11) est reliée à l'entrée du filtre émetteur (FTX11)
à chaque fois de manière fixe mais détachable.

4. Dispositif selon la revendication 1, **caractérisé en ce que**, pour une connexion de quatre signaux d'émission (TX13, TX14), on prévoit une unité d'extension supplémentaire (EW) pouvant être connectée par le biais de connexions fixes mais détachables.

5. Dispositif selon la revendication 4, **caractérisé**
- **en ce que** l'unité d'extension (EW) contient un troisième et un quatrième conducteur unidirectionnel (AS13, AS14) pourvus à chaque fois d'une entrée et d'une sortie et les entrées respectives sont exécutées pour une connexion fixe mais détachable avec des unités émettrices respectivement associées,
- **en ce que** l'unité d'extension (EW) contient un deuxième et un troisième dispositif de couplage (K12, K13) pourvus à chaque fois d'une première et d'une seconde entrée (E1, E2) ainsi que d'une sortie (A),
- **en ce que** la sortie du troisième conducteur unidirectionnel (AS13) est reliée à une première entrée (E1) du deuxième dispositif de couplage (K12) et en ce que la sortie du quatrième conducteur unidirectionnel (AS14) est reliée à une seconde entrée (E2) du deuxième dispositif de couplage (K12),
- **en ce que** la sortie (A) du deuxième dispositif de couplage (K12) est reliée à une première entrée (E1) du troisième dispositif de couplage (K13),
- **en ce qu'**une seconde entrée (E2) et la sortie (A) du troisième dispositif de couplage (K13) sont exécutées pour une connexion fixe mais détachable.

6. Dispositif selon la revendication 5, **caractérisé en ce que**, pour une connexion de quatre signaux d'émission (TX11, TX12, TX13, TX14),
- une première unité émettrice (TX11) est reliée à l'entrée du premier conducteur unidirectionnel (AS11),
- une deuxième unité émettrice (TX12) est reliée à l'entrée du deuxième conducteur unidirectionnel (AS12),
- une troisième unité émettrice (TX13) est reliée à l'entrée du troisième conducteur unidirectionnel (AS13),
- une quatrième unité émettrice (TX14) est reliée à l'entrée du quatrième conducteur unidirectionnel (AS14),
- la sortie du premier conducteur unidirectionnel (AS11) est reliée à la seconde entrée (E2) du premier dispositif de couplage (K11) et la sortie (A) du premier dispositif de couplage (K11) est reliée à la seconde entrée (E2) du troisième dispositif de couplage (K13) et
- la sortie (A) du troisième dispositif de couplage (K13) est reliée à l'entrée du filtre émetteur (TFX11)
à chaque fois de manière fixe mais détachable.

7. Dispositif selon l'une des revendications précédentes, **caractérisé en ce que** les dispositifs de couplage (K11, K12, K13) sont exécutés en tant que coupleurs hybrides 3dB dont le port non utilisé respectif est terminé par une résistance de charge.

8. Dispositif selon l'une des revendications précédentes, **caractérisé en ce que** le filtre duplex émetteur-récepteur (DF11) comprend un filtre récepteur (FRX11) par le biais duquel un signal reçu par l'antenne émettrice-réceptrice parvient à un circuit de sélection (US1, US2, US3) par le biais d'amplificateurs et de filtres respectifs branchés derrière le filtre récepteur (FRX11).

9. Dispositif selon la revendication 8, **caractérisé**
- **en ce que** l'unité d'extension (EW) contient également un circuit de sélection (US3) et
- **en ce que**, lors de l'utilisation de l'unité d'extension (EW), son circuit de sélection (US3) est relié au circuit de sélection (US1) branché derrière le filtre récepteur (FRX11) pour une analyse de signal se déroulant au niveau du circuit de sélection (US3) de l'unité d'extension (EW).
